**Europäisches Patentamt**

**European Patent Office**

**Office européen des brevets**

(19)

(11) Veröffentlichungsnummer: **0 019 916**
**B1**

(12)

# EUROPÄISCHE PATENTSCHRIFT

(45) Veröffentlichungstag der Patentschrift:
**30.12.81**

(21) Anmeldenummer: **80102996.8**

(22) Anmeldetag: **29.05.80**

(51) Int. Cl.³: **A 23 L  1/01**, A 23 L  1/164,
A 23 L  1/216

(54) **Verfahren und Vorrichtung zur Herstellung dauerhaft haltbarer geniessbarer Scheiben, Stäbchen oder Würfel aus feuchtehaltigem grobstrukturiertem Nahrungsgut.**

(30) Priorität: **30.05.79  DE 2921936**
**21.01.80  DE 3002002**

(43) Veröffentlichungstag der Anmeldung:
**10.12.80 Patentblatt 80/25**

(45) Bekanntmachung des Hinweises auf die Patenterteilung:
**30.12.81 Patentblatt 81/52**

(84) Benannte Vertragsstaaten:
**AT BE CH DE FR GB LI NL SE**

(56) Entgegenhaltungen:
**DE-A1-2 850 401**
**GB-A-1 344 125**

(73) Patentinhaber: **Wienecke, Franz, Prof. Dr.-Ing.,**
**August-Lange-Strasse 14, D-3406 Bovenden (DE)**

(72) Erfinder: **Wienecke, Franz, Prof. Dr.-Ing.,**
**August-Lange-Strasse 14, D-3406 Bovenden (DE)**

(74) Vertreter: **Kraus, Walter, Dr. et al, Patentanwälte Dres.**
**Kraus & Welsert Irmgardstrasse 15,**
**D-8000 München 71 (DE)**

## Verfahren und Vorrichtung zur Herstellung dauerhaft haltbarer geniessbarer Scheiben, Stäbchen oder Würfel aus feuchtehaltigem grobstrukturiertem Nahrungsgut

Die Erfindung betrifft ein Verfahren und eine Vorrichtung zur Herstellung dauerhaft haltbarer geniessbarer Scheiben (Flakes, Chips), Stäbchen oder Würfel aus feuchtehaltigen biologischen Produkten mit grobstrukturiertem lockerem Zellenaufbau.

Es ist allgemein bekannt, Nahrungsmittel mit Hilfe von Mikrowellen oder Infrarotwellen zu trocknen. Bei entsprechend eingestellter Strahlungsintensität tritt bei einer Reihe von Stoffen gleichzeitig ein Aufblähen auf. Insbesondere lassen sich teigförmige Massen, da der im Inneren entstehende Dampf schwerlich entweichen kann, in ihrem Volumen durch Blasen und Hohlraumbildung vergrössern. Es ergibt sich eine Blähstruktur.

Grobstrukturierte Stoffe, wie Kartoffeln, halten aber selbst bei intensiver Bestrahlung den im Inneren entstehenden Dampf nicht genügend fest. Es kann sich praktisch keine Blähstruktur ausbilden.

Die bekannten Kartoffelchips erhalten sich ihre Blähstruktur im kochenden Ölbad, wobei das die Chips umgebende Öl zunächst den Dampfaustritt verhindert. Bei diesem Prozess nehmen die Chips etwa 40 Gew.-% Öl auf. Chips mit einem derartigen Ölgehalt werden von vielen aus ernährungsphysiologischen Gründen abgelehnt. Zudem werden die ölhaltigen Chips nach etwa acht Wochen ranzig.

In der US-Patentschrift 3 689 282 wird ein Verfahren zur Vorbehandlung von Kartoffeln beschrieben, gemäss dem Kartoffeln nach kurzzeitiger Erwärmung, zum Beispiel mit Ultrarotstrahlen, servierfähig sind. Es sollen die Zeiten, die zum Garkochen der Kartoffeln benötigt werden, vorweggenommen werden, um schnell gare Kartoffeln, beispielsweise in Restaurants, anbieten zu können. Gemäss der US-Patentschrift 3 689 282 werden völlig ungeschälfte Kartoffeln gekocht, wobei sich beim Kochen eine sogenannte Gelatineschicht auf der Kartoffeloberfläche bildet. Diese Schicht dient als Konservierungsmittel. Die Kartoffeln werden dann abekühlt und vor Gebrauch erhitzt. Ein Verfahren zur Herstellung von haltbaren Kartoffelchips wird in dieser US-Patentschrift nicht beschrieben.

Der Erfindung liegt die Aufgabe zugrunde, ein Verfahren und eine Vorrichtung zur Verfügung zu stellen, gemäss dem grobstrukturierte feuchtehaltige biologische Nahrungsprodukte mit lockerem Zellaufbau so verbehandelt werden können, dass sie sich bei der Bestrahlung aufblähen.

Diese Aufgabe wird dadurch gelöst, dass Scheiben (Flakes, Chips), Stäbchen oder Würfel oder sonstige kleine Teilchen aus dem feuchtehaltigen biologischen Produkt mit grobstrukturiertem lockerem Zellenaufbau vor der Beaufschlagung mit Mikrowellen oder Infrarotwellen einem Kochprozess und damit einem Aufschlussprozess unterworfen werden, der so kurzzeitig gehalten wird, dass nur die oberflächennahen Schichten der Scheiben dem Umwandlungsprozess ausgesetzt sind, den das Kochen bewirkt.

Die Erfindung betrifft somit ein Verfahren zur Herstellung dauerhaft haltbarer geniessbarer Scheiben (Flakes, Chips), Stäbchen oder Würfel und eine Vorrichtung zur Durchführung des Verfahrens, wie sie in den Ansprüchen definiert werden.

Durch den Kochprozess findet eine Verdichtung der Oberflächenhaut statt, wobei der Stärkeaufschluss und die Umwandlung der Proteine eine Rolle spielen.

Der Kochprozess kann entweder im Wasserbad oder mit Dampf durchgeführt werden. Vorzugsweise wird er im Wasserbad durchgeführt. Die Zeiten, die für den Kochprozess erforderlich sind, können vom Fachmann leicht anhand von Vorversuchen in Abhängigkeit von der Grösse der zu kochenden kleinen Teilchen ausgewählt werden. Für den Kochprozess im Wasserbad sind Zeiten von etwa 5 sec bei einer Scheibendicke von etwa 1,5 mm vorgesehen, für den der Wellenbeaufschlagung Zeiten von 10 sec bis 3 min, je nach Intensität des Wellenfelds. Die Zeiten können jedoch auch etwas länger oder kürzer sein und hängen u.a. auch von dem Wassergehalt des Nahrungsguts ab. Der Aufschluss der oberflächennahen Schichten kann auch durch Dampf erfolgen, der von aussen herangeführt oder bei feuchten Oberflächen des Gutes durch Beheizen entsteht.

Die kleinen Teilchen können Scheibchen, wie Flakes oder Chips, mit einer Dicke von beispielsweise 1 bis 2 mm, Stäbchen mit einem Querschnitt von beispielsweise 10 bis 15 mm$^2$ oder Würfel sein. Sie können auch beliebige andere Formen aufweisen.

In weiterer Ausbildung des Gegenstands der Erfindung ist vorgesehen:

die Scheiben während der Beaufschlagung mit Wellen durch dünne Platten abzudecken; ferner dem den Kochprozess bewirkenden Wasser oder Dampf Gewürze oder Geschmacksstoffe beizumengen (Salz, Pfeffer); ferner

die Scheiben nach erfolgter Wellenbeaufschlagung einem Trocken- und gegebenenfalls einem Röstprozess, beispielsweise mit Infrarotstrahlen oder Heissluft, auszusetzen.

Die erste der genannten Massnahmen bewirkt, dass die Oberflächen der Scheiben durch den – wenn auch geringen – Anteil an Dampf, der die gekochten Schichten doch noch durchtritt, benetzt werden, wodurch sie feucht bleiben, was einer Verhärtung und Verkrustung entgegenwirkt.

Die zweite Massnahme stellt eine besonders einfache und durchgreifende dar; ein nachträgliches getrenntes Besprühen oder Bestäuben mit Geschmacksstoffen kann entfallen.

Durch die dritte Massnahme wird erreicht, dass den Chips die Feuchte bis auf wenige Prozentpunkte entzogen und sie eine knusprige Oberfläche erhalten, falls dies gewünscht wird.

Bei dem erfindungsgemässen Verfahren wird das zu behandelnde Gut in gereinigtem geschältem bzw. entsprechend vorbereitetem Zustand der Verarbeitung zugeleitet.

Die erfindungsgemässe Vorrichtung soll eine Hintereinanderanordnung der folgenden Teile enthalten:

1. ein Schnitzelwerk, auch Schnitzler genannt, durch das das Gut in kleine Teilchen, beispielsweise in Scheibchen von 1 bis 2 mm Dicke, Stäbchen oder Würfel zerlegt wird;

2. eine schräg gestellte Rutschfläche, auf der die kleinen Teilchen abwärts gleiten bzw. über der sie hinunterfallen;

3. mindestens ein einziges laufendes Band, das gelocht ist und das die folgenden Teile der Vorrichtung durchläuft:

a) Eine durch zwei Leitrollen schräg aufwärts führende Bahn. Diese Bahn bildet mit der Rutschfläche einen Vorratsraum für die Scheibchen. Dieses aufwärtsführende Band nimmt aus dem Vorratsraum Scheibchen für Scheibchen mit. Da es vorkommt, dass zwei übereinanderliegende Scheibchen mitgenommen werden, ist am oberen Ende dieser Strecke eine Bürstenwalze angeordnet, die die Scheibchen voneinander trennt. Unter dem laufenden Band befindet sich ein nur gegen das Band hin offenes Gehäuse, das ständig mit Hilfe einer Luftabsaugvorrichtung unter Unterdruck gehalten wird. Dadurch werden die Scheibchen auf dem Band festgesogen.

b) Eine durch drei Leitrollen gebildete Bandstrecke, in der das Band über die beiden äusseren und unter der mittleren Rolle verläuft. Unter dieser Strecke ist eine Wanne gelagert, die ständig kochendes Wasser enthält. Die mittlere Leitrolle ist so tief gelagert, dass sie das Band in das kochende Wasser drückt. Die Aufenthaltsdauer der kleinen Teilchen, zum Beispiel Scheibchen, in dem kochenden Wasser kann durch die Tiefe der mittleren Leitrolle eingestellt werden. Wesentlich ist, dass die kleinen Teilchen, zum Beispiel die Scheibchen, nur kurze Zeit, beispielsweise 4 bis 10 sec lang, dem Kochprozess ausgesetzt werden. Der Kochprozess soll nur so lange dauern, bis nur die oberflächennahe Zone der Scheibchen dem Umwandlungsprozess unterworfen wird, der durch das Kochen in Form von Gelatinisierung und Verdichtung eintritt. Das Innere der Scheibchen soll praktisch ungekocht bleiben.

c) Ein Hohlraum, der zur thermischen Beaufschlagung des Gutes dienen soll. In aufeinanderfolgenden Teilstrecken erfolgen in ihm: eine Beschickung mit Warmluft, wodurch die an der Oberfläche der Scheibchen noch haftende Feuchtigkeit zum Verdunsten gebracht wird. Dadurch wird sie undurchlässiger gegenüber der im Inneren der kleinen Teilchen befindlichen Feuchtigkeit.

d) Schliesslich findet eine Beaufschlagung mit Mikrowellen statt, wozu geeignete Sender angeordnet sind. Diese Beaufschlagung trifft auch das Innere der Teilchen, das noch wasserhaltig ist. Das Wasser verdampft im Innern und bläht, da es die Aussenschicht nur schwer durchdringen kann, das Teilchen auf. Damit ist das Ziel der Behandlung im wesentlichen erreicht. Eine Beaufschlagung der Teilchen nur mit Infrarotstrahlen könnte dieses Ziel nicht so vollkommen erreichen; bis alle Feuchtigkeit im Innern zum Verdampfen gebracht wird, können bereits Stellen mit unerwünschter Verkühlung auftreten.

e) Eine Auslaufstrecke, in der dem Gut zunächst noch einmal Warmluft zugeführt wird, um das Gut endgültig zu trocknen, dann aber Frischluft, um es abzukühlen.

Die entscheidenden Schritte des Verfahrens liegen in der Folge von Kochprozess und der Beaufschlagung mit Wellenenergie, die in das Gut eintritt bzw. es ganz durchdringt, wobei gleichzeitig trocknungsfähige Luft das Gut umstreichen kann.

Der Verfahrensabschnitt der Mikrowellentrocknung und der Nachtrocknung auf konvektivem Weg bedürfen einer längeren Zeit, wenn die Intensitäten der Mikrowellenbestrahlung nicht gross (ca. 3 bis 5 kW) bzw. die Lufttemperaturen nicht zu hoch sind (50 °C), was bei kleineren Anlagen der Fall ist. Geringere Intensitäten setzen auch das Risiko von Bräunungen herab. Sie bedingen andererseits aber grössere Verweilzeiten, was längere Bandstrecken bei einem kontinuierlichen Verfahrensablauf bedeutet.

Zur Beseitigung dieses Nachteils kann man die Infrarotbestrahlung kontinuierlich, beispielsweise auf einem laufenden Band, und die Mikrowellenbehandlung und die Nachtrocknung diskontinuierlich in Chargen, beispielsweise in Behältern, vornehmen. Das ist möglich, da nach der Infrarotbehandlung die kleinen Teilchen, beispielsweise Chips, bereits so abgetrocknet sind, dass sie nicht mehr zusammenkleben, wenn man sie zusammenschüttet und weiterbehandelt. Die chargenweise Miktrowellenbehandlung und Trocknung führt zu kompakteren Anlagen, was technisch vorteilhaft ist.

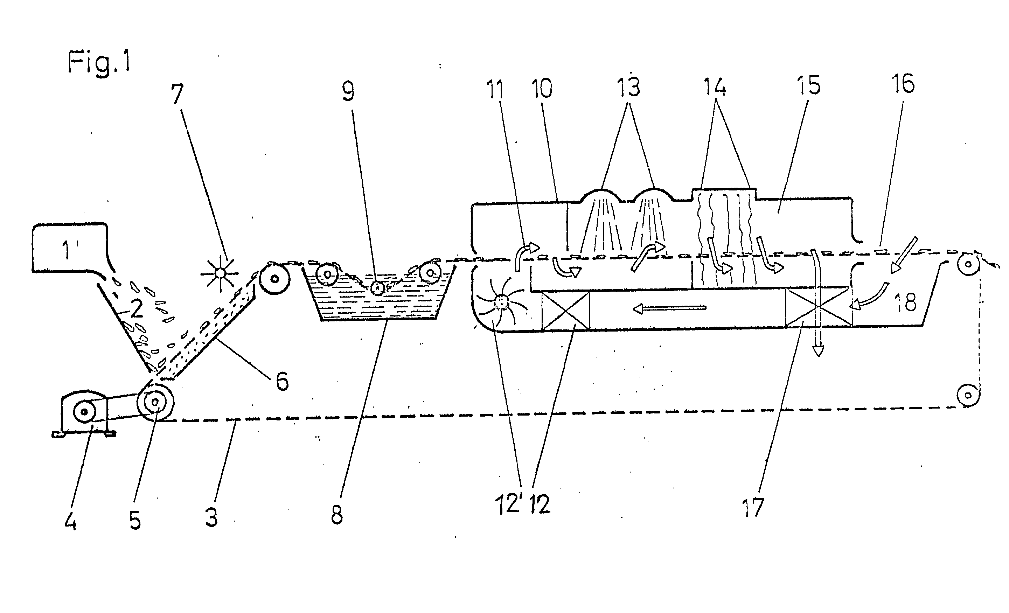

Im folgenden werden anhand der Figuren 1, 2 und 3 zwei Ausführungsarten der Vorrichtung dargestellt:

In Figur 1 entlässt der Schnitzler 1 die Kartoffelscheibchen auf die Rutschfläche 2 in den Vorratsraum, der durch die Rutschfläche und die schräg aufsteigende Anlauffläche des laufenden Bandes 3 gebildet wird. Das laufende Band 3 wird durch einen Antriebsmotor 4 über die Antriebsrolle 5 angetrieben. Unter der Anlauffläche des gelochten Bandes befindet sich ein nur gegen das Band offenes Gehäuse 6, das unter Unterdruck gehalten wird, wodurch die Scheibchen auf dem Band angesaugt gehalten werden. Die Bürstenwalze 7 streift übereinanderliegende Scheibchen ab. Über der Wanne 8 mit kochendem Wasser taucht mindestens die Leitrolle 9, unter der das Band verläuft, in das kochende Wasser. Es ist auch ein Kochen im Dampfbad möglich oder durch Infraroterwärmung ohne Wasserbad, wenn stärkehaltiges Gut eine genügende Eigenfeuchte für den Stärkeaufschluss besitzt.

Danach tritt das Band in den Tunnel 10. Die im Lufterhitzer 12 erzeugte Warmluft 11 wird durch den Ventilator 12' im Lauf der Tunnelstrecke mehrfach durch das Band getrieben, wozu geeignet angebrachte Leitbleche beitragen. Es folgt die Infrarotbestrahlung durch die Strahler 13, sodann die Beaufschlagung mit Mikrowellen durch die Generatoren 14, wobei es aufbläht. Das Gut ist während der Bestrahlung und im sich anschliessenden Raum 15 der Warmluft ausgesetzt. Die Warmluft, die durch Feuchtigkeit angereichert ist, verlässt den Tunnel durch den ersten Kanal des Wärmeaustauschers 17, durch dessen zweiten Kanal Frischluft 18 mit dem Ventilator 12' von oben durch das Band eingesogen wird. Die Frischluft kühlt das Gut ab, das nun in Gestalt von Chips vorliegt.

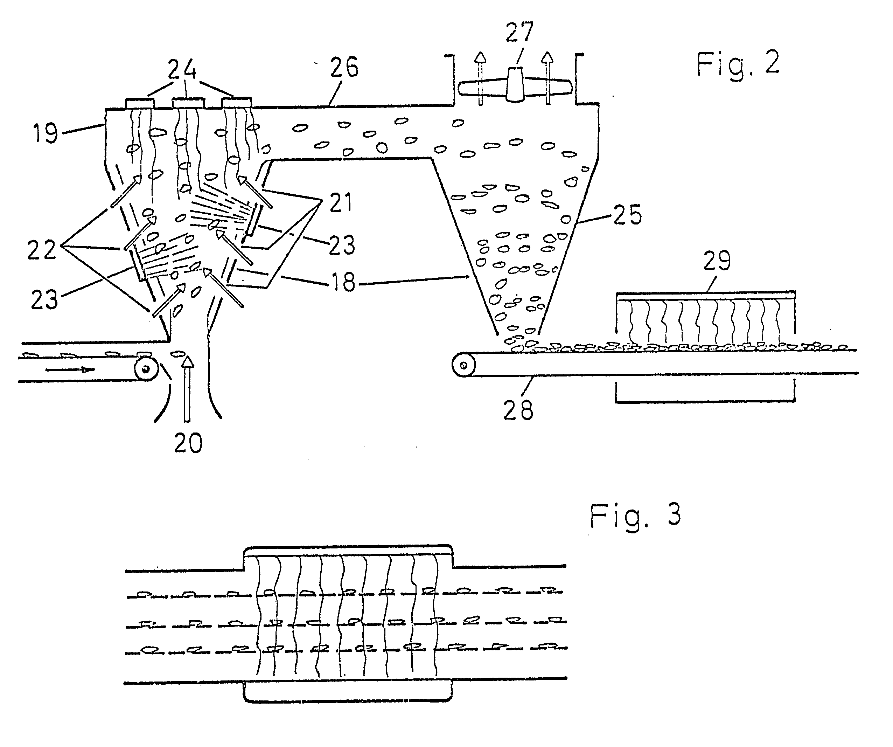

Die Figur 2 sind die Teile dieser Vorrichtung bis zum Eingang in den Tunnel 10 der Figur 1 dieselben. Die Vorrichtung weist zwei laufende Bänder auf, von denen das erste nach Durchlaufen der Kochendwasser-Wanne endet. Zwischen das zweite und erste laufende Band ist bei dieser Vorrichtung ein Steigsichter 19 und Zyklon 25 eingefügt. Der erste Behälter 19 desselben weist an seinem unteren Ende eine Öffnung auf, in die ein Strom Warmluft 20 eingesaugt wird. Seine Wände sind mit Öffnungen 21 versehen, durch die ein vorzugsweise warmer Luftstrom 22 eingesogen wird, um ein Ankleben der Chips an die Wände zu verhindern. Die Wände sind ausserdem mit Infrarotstrahlern 23 ausgestatet. An der Decke des Behälters sind Generatoren 24 für Mikrowellen angeordnet. Der erste Behälter 19 ist mit dem zweiten Behälter 25, dem Zyklon, durch einen Kanal 26 verbunden. Der Kopf des zweiten Behälters weist eine grosse Öffnung auf, in der ein Sauggebläse 27 eingebaut ist. Durch die Eingangsöffnung des Steigsichters werden die Scheibchen vom ersten Band abgehoben und aufwärtsgetrieben, durch Warmluft und Strahlung getrocknet, aufgebläht und in den Zyklon gefördert, in dem sie zu dessen unterer Öffnung herabfallen. Dort werden sie von dem zweiten laufenden Band 28 aufgefangen und in einen Tunnel gefördert, in dem die Scheibchen einer weiteren Beaufschlagung mit Mikrowellen durch einen entsprechenden Generator 29 ausgesetzt werden. Wie bei der Vorrichtung nach Figur 1 kann nun eine abschliessende Trocknung und eine Endabkühlung erfolgen.

Bei reiner Bandförderung stellt die Strecke mit der Beaufschlagung durch Mikrowellen den Engpass dar. Zur Behebung dieses Nachteils sieht die Anmeldung vor, dass der Mikrowellenbereich mit mehreren Bändern, die übereinander angeordnet sind, durchlaufen wird. Dies ist in Figur 3 veranschaulicht. In diesem Fall wird als Material für die Bänder ein solches gewählt, das durchlässig für Mikrowellen ist.

**Patentansprüche**

1. Verfahren zur Herstellung dauerhaft haltbarer, geniessbarer Scheiben (Flakes, Chips), Stäbchen oder Würfel aus feuchtehaltigen, biologischen Produkten mit grobstrukturiertem lockerem Zellenaufbau, bei welchem das Auflockern und Aufblähen des Inneren der Scheiben durch Beaufschlagung mit einem Mikrowellenfeld oder einem Infrarotwellenfeld solcher Intensität erfolgt, dass die Feuchtigkeit der Scheiben kurzzeitig verdampft, dadurch gekennzeichnet, dass die Scheiben vor diesem Prozess einem Kochprozess unterworfen werden, der so kurzzeitig erfolgt, dass nur die oberflächennahe Schicht der Scheiben dem Aufschlussvorgang unterworfen wird.

2. Verfahren nach Anspruch 1, dadurch gekennzeichnet, dass die Scheiben, Stäbchen oder Würfel während der Beaufschlagung mit Wellen durch dünne Platten abgedeckt werden.

3. Verfahren nach Anspruch 1 oder 2, dadurch gekennzeichnet, dass dem den Kochprozess bewirkenden Wasser oder Dampf Gewürze oder Geschmacksstoffe beigemengt werden.

4. Verfahren nach mindestens einem der Ansprüche 1 bis 3, dadurch gekennzeichnet, dass die Scheiben, Stäbchen oder Würfel nach erfolgter Beaufschlagung mit Wellen einem Nachtrocknungs- und Röstprozess, beispielsweise durch heisse Luft oder Infrarotstrahlen, unterworfen werden.

5. Verfahren nach mindestens einem der Ansprüche 1 bis 4, dadurch gekennzeichnet, dass das Verfahren kontinuierlich durchgeführt wird oder die Infrarotbestrahlung kontinuierlich, d.h. auf einem laufenden Band, und die Mikrowellenbehandlung und die Nachtrocknung diskontinuierlich, d.h. in Chargen, durchgeführt werden.

6. Verfahren nach mindestens einem der Ansprüche 1 bis 5, dadurch gekennzeichnet, dass man als feuchtehaltige biologische Produkte mit grobstrukturiertem lockerem Zellenaufbau Kartoffeln oder Bananen verwendet.

7. Vorrichtung zur Herstellung von dauerhaft haltbaren, geniessbaren Scheiben (Flakes, Chips), Stäbchen oder Würfeln aus einem feuchtehaltigen biologischen Nahrungsgut mit grobstrukturiertem lockerem Zellenaufbau, das der Einrichtung in gereinigtem, geschältem oder entsprechend vorbereitetem Zustand roh zugeführt wird, gekennzeichnet durch die Hintereinanderanordnung der folgenden Teile:

1. ein Schnitzelwerk (1), geeignet, aus dem Nahrungsgut Scheibchen oder Stäbchen mit einem Querschnitt von etwa 10 bis 15 mm² oder Würfel zu schneiden;

2. eine schräg gestellte Rutschfläche (2), auf und über der die kleinen Teilchen abwärts gleiten bzw. fallen;

3. mindestens ein einziges laufendes Band (3), das gelocht ist und das die folgenden Teile der Einrichtung durchläuft:

3.1. eine durch zwei Leitrollen gebildete, schräg aufwärts führende Bahn, die mit der Rutschfläche (2) einen Vorratsraum bildet, wobei über dem Ende dieser Bahn eine Bürstenwalze (7) angeordnet ist, deren Aufgabe es ist, doppelt übereinanderliegende kleine Teilchen voneinander zu trennen, und unter der Bahn ein nach unten abgeschlossener Raum (6) angeordnet ist, der ständig mit Hilfe einer Luftabsaugvorrichtung unter Unterdruck gehalten wird;

3.2. eine durch drei Leitrollen gebildete Bandstrekke, von denen die mittlere Leitrolle (9) das über die beiden äusseren Leitrollen laufende Band nach unten in eine Wanne (8), in der sich kochendes Wasser befindet, ablenkt, wobei die Tiefe der mittleren Rolle einstellbar ist;

3.3. einen der thermischen Beaufschlagung des Gutes dienenden Hohlraum (10; 19), der mit aufeinander folgenden Teilen zur Warmluftbeschikkung, zur Infrarotbestrahlung und/oder zur Beaufschlagung mit Mikrowellen ausgebildet ist;

3.4. einen Tunnel, in dem das Gut mit Mikrowellen mittels Generatoren (14; 29) beaufschlagt wird; und

3.5. eine der Nachtrocknung mit Warmluft und anschliessender Kühlung des Gutes dienenden Auslaufstrecke (15, 16).

8. Vorrichtung nach Anspruch 7, dadurch gekennzeichnet, dass diese mit nur einem einzigen laufenden Band (3) ausgestattet ist und dass dieses Band nach Durchlaufen der Teile gemäss den Positionen 1., 2., 3.1. und 3.2. des Anspruchs 7 in einen der thermischen Beaufschlagung des Gutes dienenden Tunnel (10) eintritt,

dessen erster Teil ein Warmluft-Gebläse (12, 12') aufweist, das die Warmluft durch das gelochte Band treibt,

dessen zweiter Teil einen über dem Band angeordneten Infrarotstrahlern (13) enthält,

dessen dritter Teil einen über dem Band angeordneten Generator (14) für Mikrowellen aufweist, und

dessen vierter Teil als Auslaufstrecke innerhalb des Tunnels unter Beeinflussung durch die im Anfang des Tunnels eingeblasene Warmluft dient, wobei die anfallende Warmluft endgültig den ersten Kanal eines Wärmeaustauschers (17) durchläuft, durch dessen zweiten Kanal Frischluft, die auf der ausserhalb des Tunnels verlaufenden letzten Strecke des laufenden Bandes von oben durch das Band eingesogen wird, zur Speisung des Warmluftgebläses des ersten Teils des Tunnels.

9. Vorrichtung nach Anspruch 7, dadurch gekennzeichnet, dass diese mit zwei in Arbeitsrichtung der Vorrichtung hintereinander angeordneten gelochten laufenden Bändern (3; 28) ausgestattet ist, dass das erste Band (3) die Vorrichtungsteile 1., 2., 3.1. und 3.2. des Anspruchs 7 durchläuft, dass ferner zwischen dem ersten und dem zweiten Band (28) ein Steigsichter (19) und ein Zyklon (25) angeordnet ist, die an ihrem oberen Ende durch einen Kanal (26) miteinander verbunden sind, wobei in den ersten Behälter (19) von unten Warmluft (20) angesaugt wird und durch die Wandöffnungen des Behälters ebenfalls Luft zutritt, und dass an den Wänden dieses Behälters Infrarotstrahler (23) und/oder Mikrowellengeneratoren (24) angeordnet sind und dass der zweite Behälter (25) am Kopf offen gehalten und mit einem Sauggebläse (27) ausgestattet ist, dass weiterhin das zweite laufende Band (28) unter der Austrittsöffnung des Zyklons (25) beginnt, einen Tunnel (29) mit Mikrobeaufschlagung durchläuft, dem eine Vorrichtung zur Nachtrocknung und anschliessenden Kühlung nachgeordnet ist, die vom zweiten Band (28) durchlaufen wird.

10. Vorrichtung nach Anspruch 8 oder 9, dadurch gekennzeichnet, dass die unter den Positionen 1., 2., 3.1. und 3.2. genannten Vorrichtungsteile mehrfach, zum Beispiel dreifach, über- oder nebeneinander ausgebildet sind, wobei das Material für die Bänder so gewählt ist, dass es für Mikrowellen durchlässig ist, und dass die Bänder innerhalb des Tunnels so geführt werden, dass sie übereinander laufen.

**Revendications**

1. Procédé de préparation de rondelles (feuillettes, tranches minces) de bâtonnets ou de cubes, comestibles, à bonne conservation de longue durée, à partir de produits biologiques contenant de l'humidité et de structure cellulaire grossière et poreuse, suivant lequel la porosité et la structure soufflée de l'intérieur des rondelles sont obtenues par application d'un champ de microondes ou bien un champ d'ondes infrarouges d'une intensité telle que l'humidité des rondelles soit vaporisée rapidement, lequel procédé est caractérisé en ce que les lamelles sont soumises, avant ce processus, à une opération de cuisson dont la durée est si courte que seule la couche située à proximité de la surface des rondelles subit le processus de désagrégation.

2. Procédé selon la Revendication 1, caractérisé en ce que les rondelles, les bâtonnets ou les cubes sont recouverts de plaques minces pendant l'application du traitement par les ondes.

3. Procédé selon la Revendication 1 ou 2, caractérisé en ce qu'on ajoute à l'eau ou à la vapeur d'eau qui provoque le processus de cuisson, des aromates ou des parfums.

4. Procédé selon au moins l'une des Revendications 1 à 3, caractérisé en ce que les rondelles, les bâtonnets ou les cubes sont soumis, après l'achèvement du traitement par odes, à un processus de post-séchage et de grillage, par exemple par de l'air chaud ou par un rayonnement infrarouge.

5. Procédé selon au moins l'une des Revendications 1 à 4, caractérisé en ce qu'il est réalisé en continu ou bien le traitement par les rayons infrarouges est réalisé de façon continue, c'est-à-dire sur une bande qui se déplace sans fin, en permanence, tandis que le traitement par microondes et le post-séchage sont réalisés de façon discontinue, c'est-à-dire charge par charge.

6. Procédé selon au moins l'une des Revendications 1 à 5, caractérisé en ce qu'on utilise comme produits biologiques contenant de l'humidité et ayant une structure cellulaire grossière et poreuse, des pommes de terre ou des bananes.

7. Installation pour la préparation de rondelles (feuillettes, tranches minces) de bâtonnets ou de cubes, comestibles, à bonne conservation de longue durée, à partir d'un produit alimentaire biologique contenant de l'humidité, présentant une structure cellulaire grossière et poreuse, qui est introduit cru dans l'installation, à l'état nettoyé, épluché ou préparé de façon appropriée, laquelle installation est caractérisée en ce qu'elle comprend les composants suivants, placés l'un derrière l'autre:

1. un mécanisme de découpage en tranches (1) approprié pour découper à partir du produit alimentaire, des rodelles ou des bâtonnets présentant une section d'environ 10 à 15 mm² ou bien des cubes,

2. une surface inclinée de glissement (2), sur laquelle les petites parcelles glissent ou tombent vers le bas,

3. au moins une bande mobile sans fin (3), qui est perforée et qui traverse les parties suivantes de l'installation:

3.1. une voie formée par deux rouleaux de guidage, inclinée vers le haut, qui forme avec la surface de glissement (2) une trémie d'alimentation, un tambour à brosses (7) étant disposé au-dessus de l'extrémité de cette voie et ayant pour fonction de séparer les unes des autres les petites parcelles superposées par paires, tandis qu'un espace (6) clos à sa base et qui est maintenu constamment en dépression à l'aide d'un dispositif d'aspiration d'air, est disposé sous la voie;

3.2. une voie formée par trois rouleaux de guidage dont le rouleau central (9) dévie la bande qui passe sur les deux rouleaux de guidage extérieurs, vers le bas jusque dans un bac (8) dans lequel se trouve de l'eau en ébullition, la profondeur de ce rouleau central étant réglable;

3.3. un espace creux (10, 19) servant au traitement thermique du produit et qui comporte des parties placées à la suite les unes des autres pour assurer l'alimentation en air chaud, l'irradiation par les rayons infrarouges et/ou le traitement par microondes;

3.4. un tunnel dans lequel le produit est traité par des microondes à l'aide de générateurs (14, 29) et 3.5. une voie d'évacuation (15, 16) servant au post-séchage à air chaud et au refroidissement subséquent du produit.

8. Installation selon la Revendication 7, caractérisée en ce qu'elle est équipée d'une seule bande (3) qui se déplace en continu et en ce que cette bande pénètre, après avoir passé dans les parties correspondant aux points 1., 2., 3.1. et 3.2. de la Revendication 7, dans un tunnel (10) de traitement thermique du produit, qui comporte une première partie pourvue d'une soufflante d'air chaud (12, 12'), qui propulse l'air chaud au travers de la bande perforée, une seconde partie contenant des radiateurs d'infrarouges (13) disposés au-dessus de la bande, une troisième partie pourvue d'un génératuer (14) de microondes placé au-dessus de la bande, et une quatrième partie qui sert, à l'intérieur du tunnel, de voie d'évacuation sous l'influence de l'air chaud insufflé au début du tunnel, l'air chaud pénétrant dans le premier canal d'un échangeur de chaleur (17), dont le second canal reçoit de l'air frais qui est aspiré par le haut à travers la bande, dans son dernier tronçon à l'extérieur du tunnel, en vue de l'alimentation de la soufflante d'air chaud qui se trouve dans la première partie du tunnel.

9. Installation selon la Revendication 7, caractérisée en ce qu'elle est pourvue de deux bandes mobiles (3, 28) qui sont perforées et disposées l'une derrière l'autre dans la direction de travail de l'installation, en ce que la première bande (3) traverse les parties de l'installation définies dans les points 1., 2., 3.1., et 3.2 de la Revendication 7, en ce qu'un séparateur ascendant (19) et un cyclone (25) sont, en outre, montés entre la première et la seconde bande (28), lesquels sont reliés l'un à l'autre à leurs extrémités supérieures par un canal (26), de l'air chaud (20) étant aspiré par le bas dans le premier récipient (29) et de l'air pénétrant également par les orifices des parois du récipient, en ce que des radiateurs d'infrarouges (23) et/ou des générateurs de microondes (24) sont montés sur les parois de ce récipient et en ce que le second récipient (25) est maintenu ouvert en tête et est équipé d'une soufflante à aspiration (27) et en ce qu'en outre, la seconde bande mobile (28) commence en-dessous de l'ouverture de sortie du cyclone (25), passe dans un tunnel (29) de traitement par microondes à la suite duquel est placé un dispositif de post-séchage et de refroidissement subséquent, qui est traversé par la seconde bande (28).

10. Installation selon la Revendication 8 ou 9, caractérisé en ce que les parties de l'installation correspondant aux points 1., 2., 3.1 et 3.2 de la Revendication 7, sont prévues en plusieurs exemplaires, par exemple en triple exemplaire, et sont disposées les unes au-dessus ou les unes à côté des autres, la matière dont sont faites des bandes étant choisie de manière qu'elle soit perméable aux microondes, et les bandes sont guidées à l'intérieur du tunnel de manière qu'elles se déplacent l'une au-dessus de l'autre.

**Claims**

1. A method of producing edible discs (flakes, chips), sticks or cubes of durable keeping quality from moisture-containing biological products having a coarse, loosely packed cellular structure, wherein loosening and expansion of the inner portion of said discs or chips is accomplished by subjecting the chips to the action of a microwave field or an infrared wave field of such intensity that the moisture in the chips is vaporized within a short period of time, characterized by first subjecting the chips to a cooking process for a period of time short enough to digest only the layer adjacent to the surface.

2. The method of Claim 1 whrein said chips, sticks or cubes are covered with thin plates while under the action of said waves.

3. The method of Claim 1 or 2 wherein the water or steam effecting the cooking process is admixed with spices or flavorings.

4. The method according to anyone of Claims 1 to 3 wherein said chips, sticks or cubes, after having been treated with said waves, are subjected to a post-drying or roasting process using e.g. hot air or infrared rays.

5. The method according to anyone of Claims 1 to 4 wherein the entire process is carried out continuously, or wherein infrared irradiation takes place continuously, i.e. on a running belt, while microwave treatment as well as post-drying step are carried out discontinuously, i.e. in batches.

6. The method according to anyone of Claims 1 to 5 wherein said moisture-containing biological products having a coarse, loosely packed cellular structure are potatoes or bananas.

7. An apparatus for producing edible chips ( or flakes), sticks or cubes of good keeping quality from moisture-containing biological food products having a coarse, loosely packed cellular structure, said food products being fed into the apparatus in a raw, cleaned and peeled or similarly processed state, characterized by the following elements in consecutive order:

1. a slicer or cutter (1) suited for cutting the food products into chips or sticks having a cross section of about 10 to 15 sq. mm or cubes;
2. an inclined sliding surface (2) over which the cut-off pieces will slide or fall downwards; and
3. at least one perforated running belt (3) that passes through the following sections of the apparatus:
3.1. an ascending path defined by two guide rolls and forming a storage bin together with sliding surface (2), with a brush roller (7) for separating superposed or stacked-up pieces being arranged above the end of said path, and with a chamber (6) which is closed from below and constantly kept at reduced pressure by means of an air-suction device being located below said path;
3.2. a path defined by three guide rolls, of which the center guide roll (9) diverts the belt running over the to outer guide rolls downwardly into tub (8) containing boiling water, the position of said center guide roll being adjustable;
3.3. a chamber (10; 19) wherein thermal treatment of the pieces takes place, said chamber comprising consecutive devices for introducing hot air, irradiation with infrared light and/or treatment with microwaves;
3.4. a tunnel wherein the pieces are treated with micro-waves from generators (14; 29); and
3.5. a run-out path (15, 16) where the pieces are postdried with hot air and subsequently cooled.

8. The apparatus of Claim 7 comprising only a single belt (3) which, after having passed through sections 1., 2., 3.1 and 3.2. of Claim 7, enters a tunnel (10) wherein thermal treatment of the pieces takes place,
the first zone within said tunnel being provided with a hot-air blower (12, 12') by which hot air is blown through the perforations in the belt;
the second zone showing an infrared radiating system (13) located above the belt;
the third zone comprising a microwave generator (14) located above the belt; and
the fourth zone serving as run-out path within said tunnel which is still under the influence of the hot air introduced at the front end of said tunnel whereupon the accumulated hot air finally passes through the first channel of a heat exchanger (17) which, via the second channel therein, is supplied with fresh air for feeding the hot-air blower in the first zone of said tunnel, the fresh air being sucked in from above through the last section of the belt running outside of said tunnel.

9. The apparatus of Claim 7 wherein two perforated running belts (3; 28) are arranged in consecutive order in working direction of the apparatus, the first belt (3) passing through sections 1., 2., 3.1 and 3.2 of Claim 7; wherein a rising separator (19) and a cyclone (25) connected at their upper ends by channel (26) are located between first belt (3) and second belt (28), with hot air (20) being sucked up from below into the first container (19), and additional air entering through the wall openings (22) of container (19), the walls of which are provided with infrared radiators (23) and/or microwave generators (24), while the second container (25) has an open top and is provided with a subction blower (27); and wherein the second running belt (28) starts below the exit opening of cyclone (25), passes through tunnel (29) where microwave treatment takes place, and continues an along the subsequent post-drying and cooling section.

10. The apparatus of Claim 8 or 9 wherein each of sections 1., 2., 3.1 and 3.2 is present repeatedly, e.g. in triplicate, and arranged above or next to the other section; and wherein the belts are made of a material permeable to microwaves and are guided through the tunnel in such a manner that they run above each other.

Fig.1

Fig. 2

Fig. 3

